Europäisches Patentamt

European Patent Office

Office européen des brevets

(11) Veröffentlichungsnummer: **0 038 055**
A2

## (12) EUROPÄISCHE PATENTANMELDUNG

(21) Anmeldenummer: 81102789.5

(22) Anmeldetag: 11.04.81

(51) Int. Cl.³: **G 01 N 29/00,** G 01 M 17/02

(30) Priorität: 16.04.80 CH 2942/80

(43) Veröffentlichungstag der Anmeldung: **21.10.81**
**Patentblatt 81/42**

(84) Benannte Vertragsstaaten: **AT BE CH DE FR GB IT LI LU NL SE**

(71) Anmelder: **GEORG FISCHER AKTIENGESELLSCHAFT, Mühlentalstrasse 105, CH-8201 Schaffhausen (CH)**

(72) Erfinder: **Zwyssig, Jules, Ing. HTL, Hirschwiesenweg 7, CH-8200 Schaffhausen (CH)**

(54) **Ultraschallprüfverfahren.**

(57) Es wird eine Ultraschallprüfmethode angegeben, mit welcher es möglich ist, den Knotenpunkt im Profil eines gegossenen Kraftfahrzeugrades zwischen Felgenbett und Radflansch zu untersuchen. Auftretende Hohlräume in diesem Bereich können ohne weiteres toleriert werden, wenn die verbleibenden Restwandstärken zwischen den Profilschenkeln eine bestimmte Dicke nicht unterschreiten. Um ein Rad in einem einzigen Messgang und mit einfacher Messgeometrie prüfen zu können, werden zwei der drei Zwischenschenkelpartien durch direkten Nachweis über eine Echohöhenbewertung infolge seitlicher Kontraktion des Schallbündels oder teilweiser Reflektion geprüft, welche auf den Querschnitt und Ungänzenbreitheit des durchschallten Materials schliessen lässt, während die dritte Partie mittel einfacher Laufzeit quer zur Restwand gemessen wird.

COMPLETE DOCUMENT

ACTORUM AG

GEORG FISCHER AKTIENGESELLSCHAFT,     8201 Schaffhausen

2142/FEW / 14.4.1980 / Ke-bs /

Ultraschallprüfverfahren

Die Erfindung betrifft ein Ultraschallprüfverfahren für mit
Ungänzen behaftete Gussteile, sowie auf eine Einrichtung zur
Durchführung des Verfahrens und dessen Verwendung.

Es ist bekannt Werkstücke aller Art mittels Ultraschallwellen
auf Ungänzen in der homogenen Struktur hin zu untersuchen. Je
nach Art des Materials, bzw. dessen Form wurden Methoden entwickelt um mittels eines Echosignals eines ausgesandten Ultraschallimpulses welcher vom Sende-Empfangswandler selbst oder
nach Aussendung von einem reinen Sender von einem Empfänger registriert wird. Sind hierbei Sender und Empfänger auf verschiedenen Seiten des Werkstückes angeordnet, so spricht der Fachmann vom Durchschallungsverfahren, wobei die Intensität des
empfangenen Ultraschallbündels ein Mass für die Fehlerfreiheit ist, sind beide Wandler auf derselben Seite des Werkstückes
angeordnet, so spricht man vom Echoverfahren, wobei die zeitliche Verteilung von rückkehrenden im Material reflektierten
Schallwellen ausgewertet wird.

In der DE-OS 24 50 402 wird beispielsweise ein mit mehreren
Frequenzen arbeitendes Prüfsystem nach dem Impuls-Echoverfahren
geoffenbart, wobei mittels eines Prüfkopfes und mehreren Impulsgebern Signale entsprechender Frequenz erzeugbar sind,

0038055

welche in verschiedene Zonen des Materials eindringen, um auf diese Weise auf den Ort von Fehlern im Prüfquerschnitt schliessen zu können.

Die Dicke und der Verlauf einer auf einer Seite unzugänglichen Wand kann beispielsweise mit einem Verfahren nach der DE-OS 27 40 106 gemessen werden, wobei die Orientierung der Rückwand durch Optimierung des Empfangswinkels festgestellt werden kann.

Eine weitere Methode zur Fehlerlokalisierung gibt die DE-OS 20 06 110 an, wonach durch Einstellen einer Verzögerung für eines von zwei quasi Stereosignalen auf den Ort einer Fehlstelle geschlossen werden kann.

Die DE-AS 15 73 409 schliesslich zeigt einen Wagen, der zur Ultraschallprüfung von Eisenbahnschienen Prüfköpfe trägt und mit diesen die Schienen entlang geführt werden kann um einen kontinuierlichen Prüfvorgang auszuführen.

Alle diese bekannten Verfahren haben den Nachteil, dass mit ihnen zwar der Ort aber nicht die Form und bedingt die Fläche in entsprechender Projektion eines Reflektors erkannt werden kann, es sei denn, das Werkstück wird von mehreren Seiten her nach bekannten Methoden mit Ultraschall abgetastet um aus einer grossen Anzahl von Einzeldaten die Form beispielsweise eines Hohlraumes zu rekonstruieren.

Es ist Aufgabe der Erfindung, mit möglichst wenigen Prüfköpfen ein Werkstück derart zu prüfen, dass die Restwandstärken von mit Ungänzen behafteten Partien als ausreichend oder zu gering erkannt werden, wobei dies an verschiedenen Partien durch Unzugänglichkeit oder ungünstige Geometrie nicht durch direkten Reflektornachweis möglich ist.

Erfindungsgemäss geschieht dies durch die im Kennzeichen des Anspruches 1 angeführten Merkmale.

- 3 -                    0038055

Die Restwanddicke zur Einschallfläche wird durch einen oder
mehrere üblicherweise SE-Normalprüfköpfe ausgemessen.

Durch die zusätzliche Ueberwachung des Formechos vom Uebergang
im Radius zum Felgenbett, bzw. Schüsselaussenfläche zum inliegenden Felgenhorn durch mindestens zwei Winkelprüfköpfe,
sowie durch Verknüpfung der Signale mit jenen der übrigen Prüfköpfe erfolgt eine Bewertung der Ungänzenlage und Ausdehnung
sowohl im Felgenquerschnitt, wie Umfangsrichtung.

Die Erfindung wird anhand der Zeichnung näher erläutert.

Es zeigen:

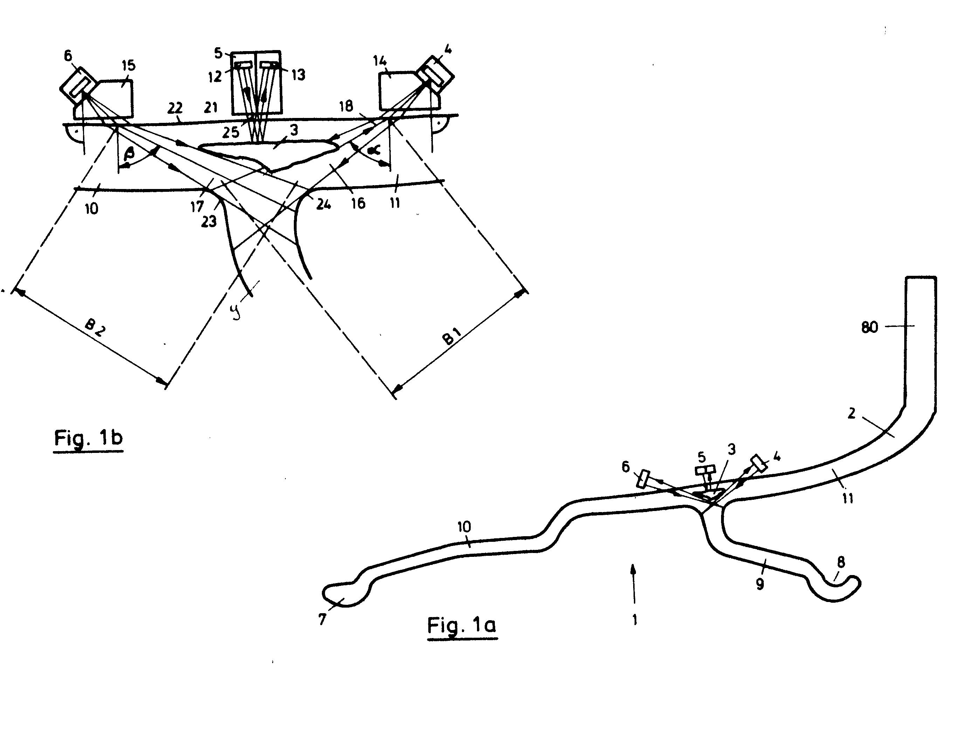

Fig. 1 a   das Profil eines radial durchschnittenen Kraftfahrzeugrades und die Prüfgeometrie im Bereich des Knotenpunktes,

Fig. 1 b   zeigt den Knotenpunkt vergrössert mit den Verläufen
           der Ultraschallbündel,

Fig. 2     zeigt eine weitere Ausführungsform der Erfindung,
           wobei mehrere Prüfköpfe zur direkten Wandstärkenmessung verwendet werden,

Fig. 3     zeigt die Anordnung von zusätzlichen Prüfköpfen zur
           Erfassung der Ausdehnung der Lunker in die Profilschenkel hinein,

Fig. 4     zeigt eine Abwandlung der Anordnung nach Fig. 3,

Fig. 5     zeigt die Anordnung der Prüfköpfe nach Fig. 1 b auf
           einem Prüfwagen, und

Fig. 6     zeigt die Anordnung des Prüfwagens innerhalb des Rades
           in einer Prüfstation.

In der Fig. 1 a ist das Radialprofil eines Kraftfahrzeugrades dargestellt, welches aus drei Hauptbestandteilen besteht, dem Felgenbett 1, der Radschüssel 2 und dem Flansch 80. Das Felgenbett 1 weist zwei Schenkel 9 und 10 auf, welche an ihren Enden in das innere Felgenkorn 7 und äussere Felgenhorn 8 übergehen. Das Horn 7 ist voll, das Horn 8 trägt an der Innenseite eine Rille, welche zur Aufnahme von Auswuchtgewichten dient.

Das Felgenbett 1 geht in den, die Schüssel 2 bildenden Schenkel 11 über, welcher das Felgenbett mit dem Radflansch 80 verbindet. Die Schüssel 2 ist mit Handlöchern durchsetzt.

Auf Grund neuer Erkenntnisse und Verfahren in der Metallurgie ist es heute möglich, Kraftfahrzeugräder in einem Stück zu giessen. Beim Guss treten jedoch häufig und zwar mit Vorliebe im Bereich des aus den drei Schenkeln 9, 10 und 11 gebildeten Knotenpunktes Hohlräume 3 auf, welche bei Unterschreitung minimaler Restwandstärken die Festigkeit der Verbindung von Felgenbett 1 und Radschüssel 2 beeinflussen können. Die durch diesen Hohlraum 3 verbleibende Restwandstärke wird mittels Ultraschall ausgemessen und gleichzeitig auf gesundes Gefüge geprüft.

Es ist keinesfall nötig absolute Lunkerfreiheit in diesem Bereich zu verlangen, da es ohne weiteres genügt, wenn der kürzeste Abstand vom Hohlraum zu einer Oberfläche des Profils eine bestimmte Mindestdicke nicht unterschreitet.

Um eine einfache und schnelle Prüfung zu gewährleisten, ist es von grossem Vorteil alle Messköpfe auf der selben, und ausserdem leichtzugänglichen Stelle des Profils anzuordnen. Dies ist in Fig. 1 a dargestellt.

Der besseren Uebersicht halber wurde dieser Knotenpunkt in der Fig. 1 b grösser dargestellt, wobei gleiche Teile mit gleichen Bezugszeichen versehen sind.

Der aus einem Sender 12 und einem Empfänger 13 bestehende Prüfkopf 5 misst in herkömmlicher Weise die Wandstärke zwischen
sich und dem Hohlraum 3. Die Prüfung erfolgt in Tauchtechnik.
Die Dicke der Restwand zwischen der Oberfläche 22 und dem Hohlraum 3 ergibt sich nach Multiplikation mit der Schallgeschwindigkeit im Guss aus der Laufzeit des Ultraschallbündels von
der Oberfläche 22 zum Hohlraum 3. Hierbei ist die Dicke des
Wasserfilms unerheblich, da sie nach Abzug der Zeitspanne
zwischen Sendeimpuls und Reflex der Oberfläche 22 von der Zeitspanne zwischen dem Reflex der Oberfläche 22 und dem Reflex
vom Hohlraum 3 herausfällt. Uebrig bleibt die doppelte Laufzeit
durch die Restwand.

Die beiden Prüfköpfe 4 und 6 arbeiten nach einem anderen Prinzip und werden im folgenden besprochen. Ueber Keile 14 und 15
welche einen exakten Einfallswinkel $\alpha$ oder $\beta$ garantieren
senden die Köpfe 4 und 6 ihre Bündel 16 und 17 in die Bereiche
zwischen dem Hohlraum 3 und der Rückwand des Gussstückes.

Hierbei geht das Bündel 16 zwischen dem Hohlraum 3 und dem
Radius 24 hindurch, bringt durch direkten Nachweis infolge
Verengung des Schallbündels durch den Hohlraum 3 oder von dem
sich im Schallbündel innerhalb des Prüfbereiches befindlichen
Nebenhohlräumen oder anderen Reflektoren zurückgeworfenen Energie 18 über den Kopf 4 zur Anzeige.

Das Bündel 17 verläuft gleichartig, wobei die Radien bzw. die
Rückwände 23 und 24 bezüglich des Bündels 16 vertauscht sind.

Die Höhe des Gesamtechos hängt augenscheinlich davon ab, wie
weit der Hohlraum 3 in das Sendebündel 16 oder 17 hineinragt.

Mit Hilfe mindestens dieser drei Prüfköpfe kann daher in einem
einzigen Arbeitsgang bestimmt werden ob die drei Restwandstärken
zwischen dem Hohlraum 3 und den Flächen 22, 23 und 24 den erlaubten Mindestwert unterschreiten.

Mit den Bezugszeichen B1 und B2 sind die Prüfbereiche der Messbündel 16 bzw. 17 bezeichnet.

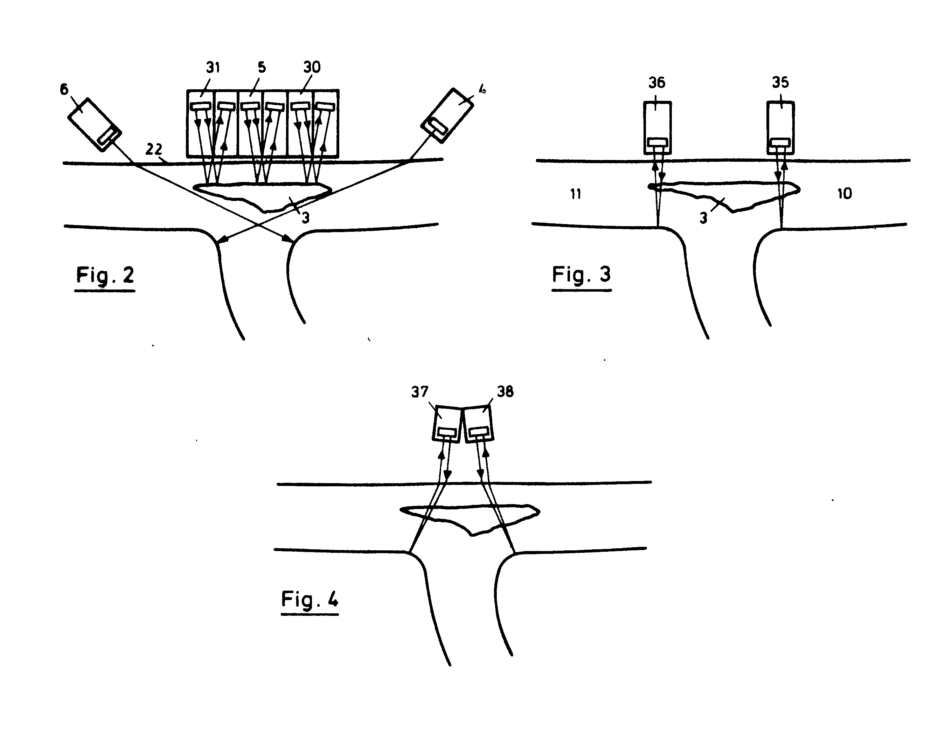

Die Fig. 2 zeigt denselben Knotenpunkt wie die Fig. 1 b, wobei
die wiederum mit gleichen Bezugszeichen 4, 5 und 6 gekennzeichneten Messköpfe nach demselben Prinzip arbeiten wie unter Fig.
1 b beschrieben wurde.

Zusätzlich zu den drei Prüfköpfen 4, 5 und 6 sind hier noch zwei
weitere Köpfe 30 und 31 angeordnet, welche die gleiche Aufgabe
haben wie der Kopf 5. Diese Verdreifachung der Laufzeitmessung
dient dem Zweck, eine Aussage über die Orientierung der prüfseitigen Begrenzungsfläche des Hohlraumes 3 zu erhalten, denn
die Restwandstärke zwischen dem Hohlraum 3 und der Oberfläche
22 ist nicht notwendigerweise überall konstant. Falls er schräg
liegt, so ist die Restwandstärke auf einer Seite geringer und
mit drei Köpfen kann dieses Minimum aufgespürt werden.

In der Fig. 3 sind zwei Prüfköpfe 35 und 36 derart angeordnet,
dass sie die Ansätze der Schenkel 10 und 11 durchschallen um
so auf die Ausdehnung des Hohlraumes 3 in die Schenkel 10 und 11
zu prüfen. Die beiden hier dargestellten Köpfe werden in Kombination mit den drei bzw. fünf anderen der Fig. 1 b und 2 verwendet.

Eine andere Anordnung dieser beiden zusätzlichen, die Schenkelansätze durchschallenden Köpfe 37 und 38 zeigt die Fig. 4.

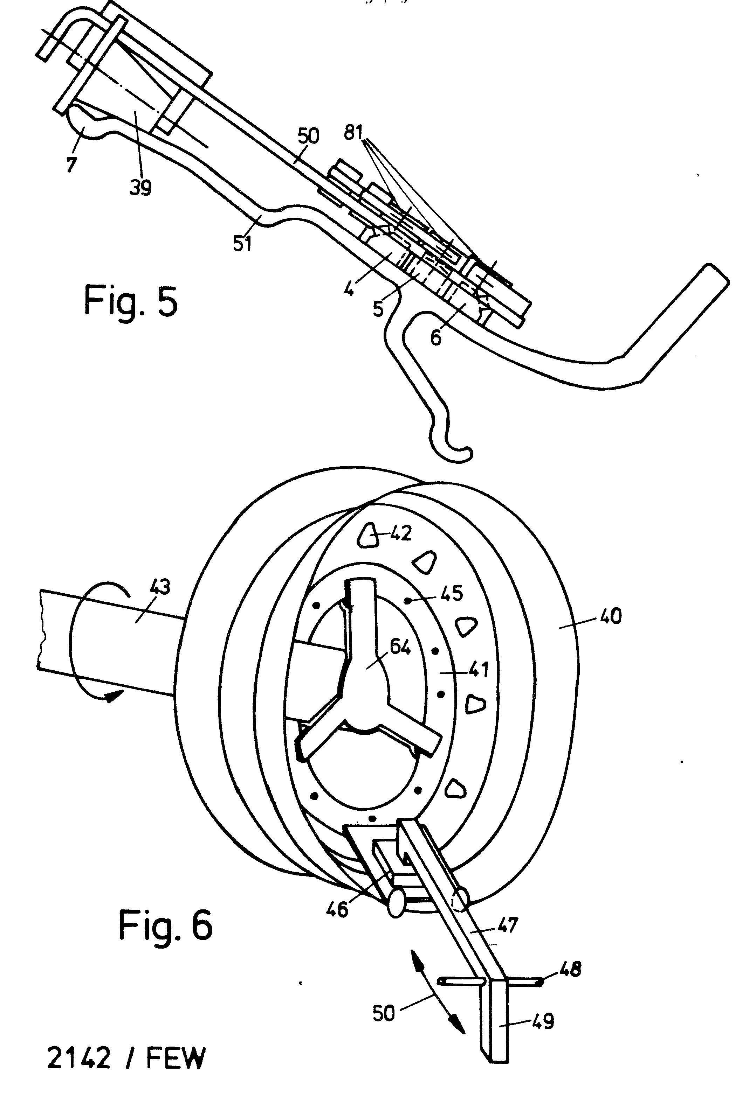

Die Fig. 5 zeigt die für Serienversuche günstige Anordnung der
fünf Prüfköpfe 4, 5, 6, 35 und 36 auf bzw. unter einem Wagen
50, welcher auf dem Profil 51 abrollt. Damit die Prüfköpfe eine
konstante und reproduzierbare Position bezüglich des Profils
51, im speziellen bezüglich des Knotenpunktes einnehmen und
beibehalten können, weist der Wagen Positioniereinrichtungen
auf. Der Wagen 50 kann für verschiedene Felgendurchmesser und
-breiten eingestellt werden. Das Rad 39 weist ein, dem Felgenhorn 7 angepasstes Umfangsprofil auf und gewährleistet so, dass der Wagen nicht bei gleichzeitiger Drehung gegen den Uhrzeigersinn nach rechts in Richtung Radflansch verrutscht. Der gleichmässige Prüfkopfabstand zur Einschallfläche wird entweder durch eine auf der Gussoberfläche schleifende Prüfkopfhalterung oder rollende Führung in Prüfkopfnähe gewährleistet.

Die unter dem Wagen 50 angebrachten Prüfköpfe 4, 5, 6, 35 und 36 sind einzeln in Achsen 81 beweglich gelagerten Halterungen befestigt, so dass sich diese der Prüffläche anpassen können. Jede Prüfkopfhalterung ist relativ zum Prüfwagen und Knotenpunkt, anhand eines dem Radtypentsprechendes Justierteiles einstellbar.

Die Fig. 6 zeigt ein Kraftfahrzeugrad 60, auf zwei drehbaren, dem Felgenaussenprofil angepassten Führungsrollen 61, 62. Auf der Radiusinnenseite ist der Prüfwagen 51 angeordnet, welcher während der Prüfung mechanisch oder von Hand gehalten am Ort bleibt, während das zu prüfende Rad 60 mechanisch oder von Hand angetrieben zur Prüfung vorbeirotiert. Das Prüfsystem steht wie in Fig. 5 gezeigt wurde zwecks einwandfreier Ankoppelung in einer Wasserpfütze 63.

Das erfindungsgemässe Verfahren ist ein Relativverfahren, bei welchem vor der Prüfung mittels einer Justierbohrung die Signalhöhen und Zeitpunkte geeicht werden.

Die Fig. 7 zeigt ein Kraftfahrzeugrad 60, welches auf einem, durch die Antriebswelle 63 drehbaren Montagesterns 64 befestigt ist. Das Rad besteht aus dem Felgenbett 1 und dem mit Schraubenlöchern 45 versehenen Radflansch 2 dessen gekrümmter Teil, der dem Schenkel 11 der Fig. 1 b entspricht über den Umfang verteilt mehrere Handlöcher 62 aufweist. In der Radschüssel ist der Prüfwagen 51 angeordnet, welcher während der Prüfung konstant an seinem Ort bleibt, und mittels seiner als Positioniereinrichtung dienenden Räder 39 und 40 ein glattes Vorbeirotieren des zu prüfenden Rades erlaubt. Der Prüfwagen ist an einem um eine Fixachse 68 schwenkbaren Winkelhebel 67, 69 befestigt, welcher bei Bewegung des Hebelteils 69 in Richtung des Pfeils 70 den Prüfwagen 51 aus der Radschüssel herausschwenkt, um einen Radwechsel am Prüfstand zu erlauben.

0038055

<u>P a t e n t a n s p r ü c h e</u>

1. Ultraschallprüfverfahren für mit Schwindungshohlräumen oder anderen Ungänzen behaftete Gussteile, dadurch gekennzeichnet, dass zur Feststellung von Restwanddicken im Bereich der Knotenpunkte bei T- oder Y-artigen Profilen (1) mittels mindestens einem Ultraschallprüfkopf (4, 6) unter definiertem Winkel ($\alpha$, $\beta$) im Impuls-Echoverfahren bei welchem ein gebündelter Ultraschall (16, 17) zwischen einem Hohlraum (3) und der der Eintrittsfläche (22) gegenüberliegenden Oberfläche (23, 24) entlang eingeschallt wird, wobei durch Direktnachweis kleiner Ungänzen (3) oder über eine Echohöhenbewertung infolge Kontraktion des für das Schallbündel (17, 18) freien Querschnittes durch eine grössere Ungänze (3) im Vergleich zu einem Referenzsignal einer Justierbohrung die verbleibende Restwanddicke messbar ist.

2. Ultraschallprüfverfahren nach Anspruch 1, dadurch gekennzeichnet, dass die Restwanddicke im Knotenpunktbereich zwischen den beiden (10, 11) von drei Schenkeln (9, 10, 11), welche den grössten Winkel miteinander einschliessen mittels Ultraschallprüfköpfen (5) nach der Laufzeitmethode und die Restwanddicken zwischen den beiden anderen Schenkelpaaren (9, 10), (10, 11) mittels Intensitätsmessung und Direktnachweis im durch Blenden festgelegten Prüfbereich feststellbar ist.

3. Ultraschallprüfverfahren nach Anspruch 1 oder 2, dadurch gekennzeichnet, dass alle Prüfköpfe (4, 5, 6, 35, 36) zwischen den beiden Profilschenkeln (10, 11) angeordnet sind, welche den grössten Winkel miteinander einschliessen.

4. Ultraschallprüfverfahren nach einem der Ansprüche 1 bis 3, dadurch gekennzeichnet, dass zur Erfassung der Wandstärke zwischen den Schenkeln (10, 11), die den grössten Winkel miteinander einschliessen mehrere Prüfköpfe (5, 30, 31)

0038055

nebeneinander angeordnet und zur gleichzeitigen Messung
einer grösseren Prüffläche vorgesehen sind.

5. Ultraschallprüfverfahren nach einem der Ansprüche 1 bis 4,
dadurch gekennzeichnet, dass zur Erfassung der Ausdehnung
des Hohlraumes (3) vom Knotenpunkt in die Schenkelarme
(10, 11) hinein diese mittels weiterer Prüfköpfe (35, 36)
direkt am Ansatz beim Knotenpunkt auf unzulässige Grösse
überprüfbar sind.

6. Verwendung des Ultraschallverfahrens nach einem der Ansprüche 1 bis 5, zur Prüfung des Uebergangs vom Felgenbett
(1) zum Radflansch (2) eines gegossenen Kraftfahrzeugrades
(60).

7. Einrichtung zur Durchführung des Ultraschallprüfverfahrens
nach einem der Ansprüche 1 bis 6, dadurch gekennzeichnet,
dass alle Prüfköpfe (4, 5, 6; 30, 31; 35, 36) auf einem
Prüfwagen (50) angeordnet sind.

8. Einrichtung nach Anspruch 7, dadurch gekennzeichnet, dass
der Prüfwagen (50) Positioniereinrichtungen (39, 40) aufweist, mit deren Hilfe er in einer bestimmten Lage in bezug
auf das rotationssymmetrische Rad (60) einstellbar ist.

9. Einrichtung nach Anspruch 8, dadurch gekennzeichnet, dass
der Prüfwagen (50) und das Rad (60) relativ zueinander
verdrehbar sind.

10. Einrichtung nach einem der Ansprüche 7 bis 9, dadurch gekennzeichnet, dass bei stillstehendem Prüfwagen (50) das
Rad (60) um seine Symmetrieachse (63) drehbar ist.

11. Verwendung der Einrichtung nach einem der Ansprüche 7 bis
10 in einer Produktionskette für Kraftfahrzeugräder, dadurch gekennzeichnet, dass in einer Prüfstation eine Ro-

0038055

tationseinrichtung (63) für nacheinander zu prüfende Räder, sowie eine Transporteinrichtung (67, 68, 69) für den Prüfwagen (50) bezüglich des Rades (60) vorhanden ist.

12. Verwendung nach Anspruch 11, dadurch gekennzeichnet, dass der Prüfwagen (50) mittels der Transporteinrichtung (67, 68, 69) an die Innenfläche des Felgenbettes (1) anlegbar und nach der Prüfung senkrecht zur Radebene aus dem Rad (60) wieder heraus schwenkbar ist.

13. Verwendung nach Anspruch 11 oder 12, dadurch gekennzeichnet, dass mehrere Prüfwagen (50) mit Prüfköpfen (4, 5, 6) an verschiedene Stellen des Rades (60) anschwenkbar sind, wobei in einem Arbeitsgang verschiedene Stellen des Profils (1) überprüfbar sind.

14. Einsatz der Schallgeschwindigkeitsmessung zur Werkstoffgütekontrolle an gegossenen Rädern.

Fig. 1a

Fig. 1b

2142/FEW

Fig. 2

Fig. 3

Fig. 4

0038055

Fig. 5

Fig. 6

0038055

-313-

2142 / FEW